# EUROPEAN PATENT APPLICATION

(11) **EP 3 763 507 A1**
(43) Date of publication of application: **13.01.2021**
(21) Application number: 19785503.4
(22) Date of filing: 29.03.2019
(51) Int. Cl.: B29C 48/92, B29C 48/34, B29D 30/48, B29K 21/00

(54) **RUBBER-COATED CORD MANUFACTURING DEVICE AND RUBBER-COATED CORD MANUFACTURING METHOD**

(30) Priority: 09.04.2018 JP 2018074679
(71) Applicant: Sumitomo Rubber Industries, Ltd., Kobe-shi, Hyogo 651-0072 (JP)
(72) Inventor: TAKEHARA, Hisaharu, Kobe-shi, Hyogo 651-0072 (JP); OMORI, Akihiro, Kobe-shi, Hyogo 651-0072 (JP)
(74) Representative: Manitz Finsterwald Patent- und Rechtsanwaltspartnerschaft mbB
(86) International application number: PCT/JP2019/013954
(87) International publication number: WO 2019/198544

(57) **Abstract**

Provided is a rubber-coated cord manufacturing technique with which the occurring of rubber spew can be prevented and waste in the form of scrap can be reduced during a rubber-coated cord manufacturing step, and with which the burden on an operator can be reduced and a high-quality rubber-coated cord can be stably produced. This rubber-coated cord manufacturing device comprises: an extrusion head that coats rubber on the surface of a cord, the extrusion head including a screw rotation type extruder which extrudes rubber, an insertion port into which the cord is inserted, and a flow path of rubber which has been extruded from the extruder; a cord supply device that supplies the cord to the extrusion head; a rubber-coated cord winding device that winds a rubber-coated cord which has been coated with rubber by the extrusion head; and a head pressure controller that controls the head pressure of the extrusion head. The head pressure controller performs control to maintain the head pressure at a prescribed level by feeding back to the extruder the monitoring results of the head pressure while the cord is coated with the rubber, and adjusting the rotation speed of the screw.

## Description

### TECHNICAL FIELD

The present invention relates to a rubber-coated cord manufacturing device and a rubber-coated cord manufacturing method for manufacturing a rubber-coated cord which is a constituent material of vehicle tires.

### BACKGROUND ART

A rubber-coated cord, such as an annular bead, which is a constituent material of vehicle tires, is manufactured by using a wire such as a steel wire or the like, i.e., a cord, as the core, and coating a rubber around the core by a rubber-coated cord manufacturing device such as a bead manufacturing device.

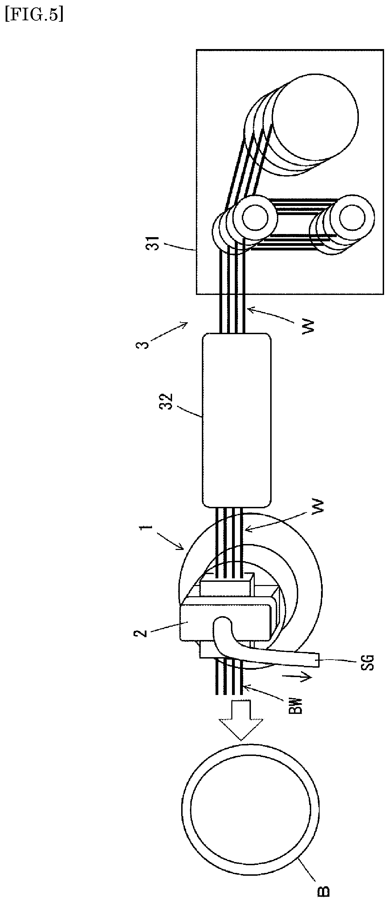

FIG.5 is a schematic diagram showing a configuration of a conventional bead manufacturing device. Wire W is sent from the unwinding device 31 of the wire feeder 3, and then, after being heated by the wire heater 32, it is inserted through the extrusion head 2 attached to the extruder 1. Next, in the extrusion head 2, a rubber supplied via the extruder 1 is coated on the surface of the wire W to process a linear single bead BW. Thereafter, it is wound by a winder, then formed into an annular shape to produce a bead B (creel bead).

At the time, in order to sufficiently coat the rubber to the wire W, it is necessary to apply a certain pressure to the rubber to be brought to contact with the wire. Hence, conventionally, a required amount or more of rubber is supplied to the extrusion head 2 in order to make the head pressure to some extent high. However, if the head pressure is abnormally high, there is a danger that the extrusion head 2 is damaged. Therefore, when the head pressure rises abnormally, the excess rubber is discharged to the outside of the extrusion head 2, as a spew rubber SG from the relief valve provided at the extrusion head 2 in order to prevent the head pressure rising excessively (e.g., Patent documents 1 and 2).

### PRIOR ART DOCUMENTS

### PATENT DOCUMENT

[Patent Document 1] JP-A-8-47984
[Patent Document 2] JP-A-2006-51748

### SUMMARY OF THE INVENTION

### PROBLEMS TO BE SOLVED BY THE INVENTION

However, in the conventional production of bead, when the discharged spew rubber SG is wound and recovered then is put into the extruder 1 as reuse rubber with new rubber at the next bead production, there has been such a problem as follows.

That is, since the spew rubber already has subjected to thermal history, the scorch time becomes shortened. As a result, when using the spew rubber as reuse rubber, the rubber becomes one of factors that the rubber is not coated sufficiently and a bead with rubber peeling is formed. Therefore, in recent years, aiming to improve tire performance further, it is required not to use the spew rubber as reuse rubber, and the spew rubber is discarded.

Accordingly, an object of the present invention is to provide a rubber-coated cord manufacturing technique that can prevent occurrence of spew rubber during the manufacturing process for a rubber-coated cord and reduce the disposal as scrap, as well as, reduce the burden on operator and stably produce a high quality rubber-coated cord.

### MEANS FOR SOLVING THE PROBLEMS

The present inventors have conducted extensive studies for solving the above problems, found that the above problems can be solved by the invention described below, and completed the present invention.

The invention according to claim 1 is,
a rubber-coated cord manufacturing device for manufacturing a rubber-coated cord by coating a rubber on a cord,
which comprises
a screw rotation type extruder for extruding the rubber;
an extrusion head for coating the rubber on the surface of the cord, which has an insertion port into which the cord is inserted and a flow path of the rubber extruded from the extruder;
a cord supply device for supplying the cord to the extrusion head;
a rubber-coated cord winding device for winding the rubber-coated cord coated by the extrusion head; and
a head pressure controller for controlling the head pressure of the extrusion head;
wherein
the head pressure controller controls the head pressure to maintain it at a predetermined pressure by monitoring the head pressure, feeding back the results of monitoring to the extruder and adjusting the rotation speed of the screw during the working of coating the rubber to the cord.

The invention according to claim 2 is,
the rubber-coated cord manufacturing device characterized in that the rubber-coated cord is a bead.

The invention according to claim 3 is,
the rubber-coated cord manufacturing device according to claim 1 or claim 2, characterized in that the head pressure controller is a device for controlling the head pressure by PI control.

The invention according to claim 4 is,
the rubber-coated cord manufacturing device according to any one of claims 1 to 3,
which further comprises a cord rate controller for controlling the rate of supplying the cord to the insertion port of the extrusion head to a predetermined rate.

The invention according to claim 5 is,
a rubber-coated cord manufacturing method for manufacturing a rubber-coated cord by forming a rubber coating on surface of a cord with a rubber-coated cord manufacturing device according to any one of claims 1 to 4,
which comprises
a rubber supply step of supplying the rubber to the extrusion head with a screw rotation type extruder;
a cord insertion step of inserting the cord into the insertion port of the extrusion head;
a rubber-coated cord processing step of processing a rubber-coated cord by coating the rubber extruded from the extruder on the surface of the inserted cord; and
a rubber-coated cord winding step of winding the processed rubber-coated cord,
wherein
the head pressure of the extrusion head is controlled to maintain at a predetermined pressure by monitoring the head pressure of the extrusion head with the head pressure controller, feeding back the results of monitoring to the extruder and adjusting the rotation speed of the screw during the rubber-coated cord processing step.

The invention according to claim 6 is,
the rubber-coated cord manufacturing method according to claim 5,
wherein the head pressure is controlled within a range of 8-12 MPa with the head pressure controller when coating the rubber on the surface of the cord.

The invention according to claim 7 is,
the rubber-coated cord manufacturing method according to claim 5 or claim 6, wherein
a rubber-coated cord manufacturing device according to claim 4 is used, and
the feed rate of the cord is controlled to a constant rate with the cord rate controller.

### EFFECT OF THE INVENTION

According to the present invention, can be provided a rubber-coated cord manufacturing technique, wherein occurrence of spew rubber is prevented during the rubber-coated cord manufacturing process and disposal as scrap is reduced, as well as, the burden on the operator is reduced and a high quality rubber-coated cord can be produced stably.

### BRIEF DESCRIPTION OF THE DRAWINGS

[FIG.1] is a schematic view showing a configuration of a bead manufacturing device according to an embodiment of the present invention.
[FIG.2A] is a schematic front view of an extruder of a bead manufacturing device according to an embodiment of the present invention.
[FIG. 2B] is a schematic plan view of the extruder of the bead manufacturing device according to an embodiment of the present invention.
[FIG. 3A] is a schematic front view of an extrusion head of a bead manufacturing device according to an embodiment of the present invention.
[FIG. 3B] is a left side schematic view of the extrusion head of the bead manufacturing device according to an embodiment of the present invention.
[FIG. 3C] is a right side schematic view of the extrusion head of the bead manufacturing device according to an embodiment of the present invention.
[FIG. 4] is a schematic plan view of an extruder of a bead manufacturing device according to another embodiment of the present invention.
[FIG. 5] is a schematic view showing a configuration of a conventional bead manufacturing device.

### EMBODIMENT FOR CARRYING OUT THE INVENTION

Hereinafter, based on embodiments, the present invention will be described with reference to drawings.

### [1] Rubber-coated cord manufacturing device

### 1. Overview

First, an overview of the rubber-coated cord manufacturing device according to this embodiment is explained.

The rubber-coated cord manufacturing device according to the present embodiment comprises a screw rotation type extruder for extruding rubber, an extrusion head for coating the rubber on surface of a cord and having an inserted port where the cord is inserted and a flow path of the rubber, a cord supply device to supply the cord to the extrusion head, and a rubber-coated cord winding device for winding the rubber-coated cord where the rubber is coated. In the above respects, it is the same as the conventional rubber-coated cord manufacturing device.

However, in the present embodiment, the extrusion head does not have a relief valve for discharging the spew rubber, and the state is a substantially closed state during operation of coating the rubber to the cord to produce a rubber-coated cord. The present embodiment is different from the conventional rubber-coated cord manufacturing device in point that, during the coating to manufacture a rubber-coated cord, the head pressure is always monitored and the monitoring result is fed back to the extruder to adjust the rotation speed of the screw of the extruder in order to maintain the head pressure at a predetermined pressure.

When the extrusion head is in the closed state, as it is, the head pressure increases since there is no escape for rubber. Meanwhile, in order to perform rubber coating free from unevenness such as rubber peeling, as mentioned above, it is necessary to maintain the head pressure high to some extent. Therefore, conventionally, as described above, while supplying the required amount for coating or more of rubber to the extrusion head, an open extrusion head for discharging the excess rubber from the relief valve is provided in order to prevent excessive rise in head pressure.

Meanwhile, in order to properly control the amount of rubber coated on the cord, it is necessary to appropriately control the discharge amount of the rubber from the extruder. However, it is difficult to control the discharge amount from the rubber extruder by controlling screw rotation speed with a general rubber extruder, because rubber is a viscoelastic body. Therefore, conventionally, the control of the discharge amount has been performed by feeding back the pulling rate of cord after coating and the supply amount of rubber, but it has not been easy yet to suppress the occurrence of spew rubber.

In contrast, the present inventors have intensively studied, and, as a result, it was found that,
when a head pressure controller for controlling the head pressure of the extrusion head is provided in a screw rotation type extruder (an extruder sending the inserted rubber toward the extrusion head by rotation of a screw) conventionally used in the production of rubber-coated cord, the head pressure is constantly monitored during the working for coating the rubber to the cord, and the rotation speed of the screw is adjusted based on results of the monitoring,
the head pressure can be maintained constant, the discharge amount of the rubber can be adequately controlled, and a good rubber coating can be performed, without occurrence of spew rubber from the extrusion head in a sealed state. In the following, the present invention is explained taking, as an example, a bead manufacturing device for manufacturing a bead by coating a rubber to a wire, which is an example of a rubber-coated cord manufacturing device.

### 2. Head pressure controller

Next, the head pressure controller, which is a characteristic portion of the bead manufacturing device according to this embodiment, will be explained.

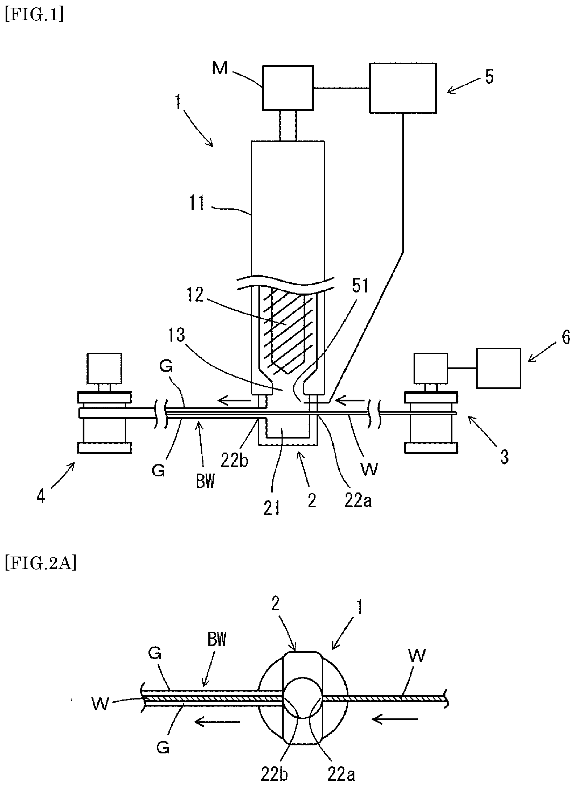

FIG.1 is a schematic view showing a configuration of a bead manufacturing device according to this embodiment. In FIG.1, 1 is an extruder, 2 is an extrusion head attached to the extrusion port 13 of the extruder 1, 3 is a wire feeder (cord feeder), 4 is a bead winding device (rubber-coated cord winding device). Moreover, 5 is a head pressure controller, and 6 is a wire rate controller (cord rate control means). The head pressure controller 5 has a head pressure control mechanism and a head pressure fluctuation suppressing mechanism, although they are not shown. Note that, 22a and 22b are the insertion ports for inserting the wire W (cord) to the extrusion head, and they are a carry-in entrance and a carry-out port, respectively.

### (1) Head pressure control mechanism

In FIG.1, a screw rotation type extruder is used as the extruder 1. Extruder 1 of screw rotation type extrudes the rubber G put into the extruder 1 toward the extrusion head 2 by rotating the screw 12 in the cylinder 11 by driving the motor M.

In this embodiment, as described above, the extrusion head 2 is kept at a substantially sealed state during the working of coating the rubber to the wire. Under this sealed state, the head pressure controller 5 measures (monitors) the head pressure with the pressure sensor 51 provided inside the extrusion head (rubber flow path 21), and feeds back the result of monitoring to the extruder 1.

Specifically, if the head pressure is monitored to be in a rising trend, the rubber discharge amount is reduced in order to lower the head pressure to the predetermined pressure by lowering the rotation speed of the motor M, i.e. the rotation speed of the screw 12. On the other hand, if it is monitored that the head pressure is in the downward trend, the discharge amount of rubber is increased in order to increase the head pressure to the predetermined pressure by raising the rotation speed of the motor M, i.e. the rotation speed of the screw 12. Thus, in a state where the head pressure was maintained at a constant pressure, a bead can be produced stably without occurrence of spew rubber.

Specifically, the rubber can be appropriately coated by maintaining the head pressure at 8-12 MPa. If it is less than 8MPa, supply amount of the rubber to the extrusion head is insufficient, a bead with rubber peeling is formed and a quality problem occurs. On the other hand, if it exceeds 12MPa, supply amount of the rubber to the extrusion head becomes excessive, load on the extruder becomes higher, and a problem that the durability of the extruder is impaired occurs. Maintaining the head pressure at 9-11MPa is more preferably.

Note that, bead production is conventionally generally performed in a multiple line operation wherein the rubber is simultaneously coated to each of the plurality of wire Ws in one extruder, as shown in FIG. 5. In such a case, conventionally, a proportional control method has been used where the extrusion rate is increased in proportion to the number of working lines. However, in the proportional control method, there is a problem, on approaching the target value, the correction amount becomes less and quick modification becomes impossible.

In contrast, in the present embodiment, PI (Proportional-Integral) control is introduced in the pressure control method for controlling the head pressure. The PI control is a control method to eliminate the difference from the target value by making correction to the head pressure based on the integral of the difference between the head pressure and the target value (the sum of the residual), and, therefore, it can cope with the rate change in line quickly. Further, it is possible to reduce the variation with respect to the target pressure value. As a result, while maintaining the head pressure at a constant pressure, a bead can be produced more stably without occurrence of spew rubber.

### (2) Head pressure fluctuation suppressing mechanism

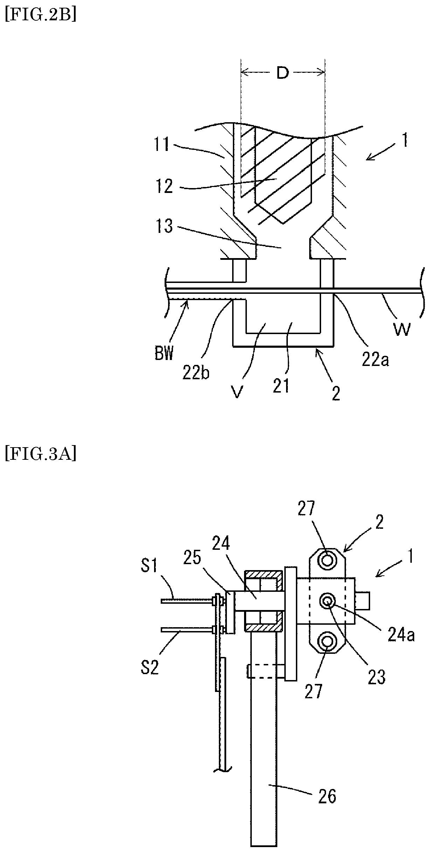

FIG.2A is a schematic front view of an extruder of the bead manufacturing device according to the present embodiment, and FIG.2B is a schematic plan view. As shown in FIG.2, the extrusion head 2 is provided with a cylindrical rubber flow path 21 connected to the extrusion port 13 of the extruder 1, thereby, variation in the head pressure can be suppressed sufficiently to maintain the head pressure at a constant pressure.

Further, the bead manufacturing device according to this embodiment is preferably provided with a wire rate controller (not shown) for controlling the rate of supplying wire W to the insertion port of the extrusion head 2 to a predetermined rate. Thus, the coating can be performed by supplying a rubber in a stable head pressure to the wire sent at a constant rate.

### 3. Burnt rubber occurrence prevention means

In bead production line, there may be a case that the line stops for a long time. At this time, if the rubber is left retained in the extrusion head for a long time, a burning rubber is produced by the thermal history. In the conventional bead manufacturing device, the spew rubber SG is discharged from a discharge port so as not to retain the rubber in the extrusion head. However, since there is no discharge port in bead manufacturing device according to this embodiment, it is preferable to provide a burn rubber occurrence prevention means described below in case of the line stops for a long time.

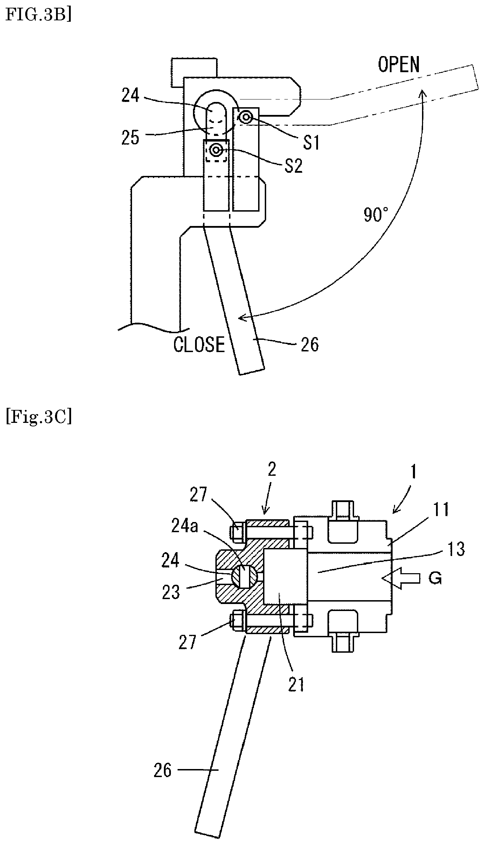

Hereinafter, a specific burnt rubber occurrence prevention means will be explained. FIG.3A, 3B, and 3C are, respectively, a schematic front view, a left side schematic view, and a right side schematic view of the extrusion head of the bead manufacturing device according to this embodiment. In FIG.3, 3 and 23 are rubber discharge ports, 24 is an open/close valve, 24a is a valve hole, 25 is an indication plate for indicating direction of the valve hole, i.e. the opening and closing of the open/close valve 24. Then, 26 is a handle for opening and closing the open/close valve 24, and S1 and S2 are proximity sensors. Incidentally, 27 is a bolt for fixing the extrusion head 2 to the extruder 1.

At the extrusion head 2, a rubber discharge port 23 connecting to the rubber flow path 21 is provided. Also, a rotatable open/close valve 24 for closing the rubber discharge port 23 is inserted, and a handle 26 is mounted at one end of the open/close valve 24 to rotate the open/close valve 24. A valve hole 24a is provided in the open/close valve 24. As shown in FIG.3C, when the valve hole 24a is oriented perpendicularly to the rubber discharge port 23, the open/close valve 24 is in a close state, whereas, when facing in the same direction, the open/close valve 24 is in an open state.

Specifically, as shown in FIG.3B, the handle 26 is pivotable 90 °, and the open/close valve 24 is open by turning the direction of the handle 26 in a substantially horizontal direction and is close by turning it in a substantially vertical direction. At one end of the open/close valve 24, is attached an indication plate 25 which pivots according to rotation angle of the open/close valve 24. Orientation of the valve hole 24a is indicated by the direction of the indication plate 25, and opening or closing of the valve 24 is detected by the proximity sensor S1, S2 provided in the vicinity of the indication plate 25.

That is, the open/close valve 24 is determined to be in the open state, when the proximity sensor S1 is detected and the rubber in the extrusion head is discharged to the outside from the open/close valve 24 in the open state. On the other hand, the open/close valve 24 is determined to be in the close state, when the proximity sensor S2 is detected. Incidentally, the proximity sensor S2 is connected to the head pressure controller 5, and the head pressure controller 5 starts when the open/close valve 24 is determined to be in the close state.

### 4. Other embodiments

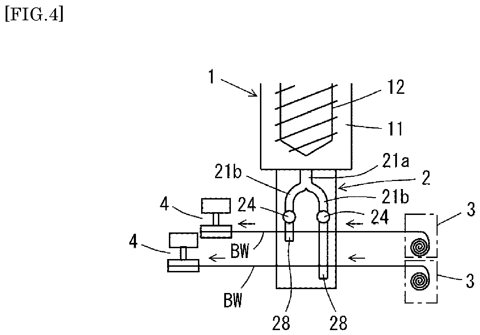

FIG.4 is a schematic plan view of the extruder of the bead manufacturing device according to another embodiment. In FIG.4, 21a is a backbone rubber flow path, 21b is a branched rubber flow path and 28 is a cap.

In this embodiment, each branched rubber flow path 21b has an openable and closable open/close valve 24, as well as, a cap 28 having an insertion port of the wire W is provided to the downstream side of the each open/close valve 24. Further, the wire feeder 3, a bead winding device 4 and the wire rate controller 6 (see FIG.1) are provided corresponding to each branched rubber flow path 21b. The pressure sensor 51 (see FIG.1) is attached to the backbone rubber flow path 21a, and is connected to the head pressure controller 5 (see FIG.1). Thus, a plurality of beads can be produced simultaneously and beads can be produced efficiently.

Also in the bead manufacturing device of this embodiment, the extrusion head 2 is substantially sealed, and, as the embodiment described above, a means for head pressure stabilization consisting of a head pressure control mechanism and a head pressure fluctuation suppressing mechanism is provided.

### [2] Rubber-coated cord production method

Hereinafter, the characteristic portions among the rubber-coated cord manufacturing method according to the present embodiment will be explained. In the following, a bead manufacturing method, which is an example of the rubber-coated cord manufacturing method, will be explained as an example.

### 1. Control of head pressure

In this embodiment, during the working of coating rubber to the wire, the head pressure is controlled to 8-12 MPa, more preferably 9-11 MPa, using a head pressure controller 5, based on the measurement result of the monitoring. Thus, the rate of occurrence of rubber peeling can be suppressed lower without causing harmful equipment such as extruder stop due to the head pressure abnormality, and a bead of good quality can be produced stably.

### 2. Control of the feed rate of cord

During the working of coating rubber to the wire (cord), the wire is sent towards the extrusion head under a constant rate using the wire rate controller 6 (cord rate controller). Thus, the rate of consumption of rubber can be maintained constant, and a bead of good quality can be produced more stably, together with the proper maintenance of head pressure. In addition, the rubber diameter of the bead can be kept suitably and stably, since the coating of rubber is performed while sending the wire at a constant rate.

### 3. Rubber used for the coating

Conventionally, there has been a case that a bead with rubber peeling was produced, since a spew rubber in which the VIS (Mooney viscosity) and ML (modulus) lowered is used as the reuse rubber and mixed with new rubber to use. Meanwhile, in this embodiment, since spew rubber does not occur, new rubber is always used for the coating of rubber. Therefore, there is no such case as the VIS and ML of the coated rubber lowered, and a bead of high quality can be produced and provided stably.

### [3] Effect of the present embodiment

Following, the effects of the present embodiment will be described.
1. In the present embodiment, the rubber-coated cord is produced by adjusting the extrusion amount of the rubber by adjusting the rotation speed of the screw with the head pressure controller, while the head pressure of the extrusion head which is in a closed state is maintained at an appropriate pressure with high precision. As a result, a good rubber coating can be performed without occurrence of spew rubber and a rubber-coated cord of good quality can be produced stably.
2. Since no spew rubber SG occurs, the amount of rubber to be discarded as scrap is reduced significantly, along with it, it is possible to greatly reduce the costs associated with disposal of rubber.
3. Furthermore, since no spew rubber SG occurs, the discharge amount of rubber by the extruder can be reduced than conventional technology. As a result, rotation speed of the screw of the extruder can also be reduced, thereby the progress of wear can be suppressed and it is possible to extend the life of the extruder.

The effects of the bead manufacturing device and the bead manufacturing method of this embodiment are the same as those of the rubber-coated cord manufacturing device and the rubber-coated cord manufacturing method. Note that, as the cord, in addition to the steel wire, a cord of other metals, a cord of textiles such as polyester, nylon, aramid or the like, a cord of resin materials, and the like can be mentioned.

### EXAMPLE

Hereinafter, the present invention will be explained more specifically based on examples. In the examples, the experiments are conducted by using a bead manufacturing device which is an example of a rubber-coated cord manufacturing device.

### 1. Experiment 1

### (1) Production of the bead

In Experiment 1, a bead was produced with a process of the present invention by changing the head pressure at 11 levels in the range of 5-15 MPa, and the effects of equipment on the bead manufacturing device were evaluated. In addition, the quality of the manufactured bead was evaluated. Note that, new rubber (VIS: 60, ML: 2.6) was used as the rubber.

### (2) Evaluation Results

The evaluation results are shown in Table 1.

**[Table 1]**

| Head pressure (MPa) | Re. Quality | | Re. Equipment |
|---|---|---|---|
| 15 | - | No evaluation | Abnormal head pressure Extruder stopped |
| 14 | - | No evaluation | Abnormal head pressure Extruder stopped |
| 13 | - | No evaluation | Abnormal head pressure Extruder stopped |
| 12 | Possible | Rubber peeling rate 5% or less | No problem |
| 11 | Good | No rubber peeling | No problem |
| 10 | Good | No rubber peeling | No problem |
| 9 | Good | No rubber peeling | No problem |
| 8 | Possible | Rubber peeling rate 5% or less | No problem |
| 7 | Impossible | Rubber peeling rate 20% or more | No problem |
| 6 | Impossible | Rubber peeling rate: 20% or more | No problem |
| 5 | Impossible | Rubber peeling rate 20% or more | No problem |

As shown in Table 1, in the case of setting the head pressure at 13MPa or above, abnormal head pressure occurs, and it was not possible to produce a bead, because the extruder stopped. On the other hand, in the case of setting the head pressure at 12MPa or below, it was possible to produce a bead without abnormalities of equipment.

On the other hand, while, in the case of setting the head pressure at 7MPa or below, the rubber peeling rate was 20% or more, and quality of the bead was "impossible", in the case of setting the head pressure in the range of 8-12 MPa, rubber peeling rate was 5% or less, i.e. the quality turned into good. Inter alia, when the head pressure was set within a range of 9-11 MPa, no rubber peeling occurred and the quality was "good".

### 2. Experiment 2

In Experiment 2, it was confirmed the effect of controlling the rate of supplying the wire into the insertion port of the extrusion head to a predetermined rate (constant rate).

Specifically, it was confirmed that the head pressure during manufacture of the beads was fit within the range of the upper and lower 2MPa around value 10MPa and the rubber was supplied with a stable head pressure, when the rate of supplying the wire into the insertion port of the extrusion head was set at a constant rate using a wire rate controller.

Although the present invention has been explained based on the embodiments, the present invention is not limited to the above embodiment. Within the scope of the same as or equivalent to the present invention, various modifications to the above embodiment can be made.

### DESCRIPTION OF THE REFERENCE SIGNS

- 1: extruder
- 2: extrusion head
- 3: wire feeder
- 4: bead winding device
- 5: head pressure controller
- 6: wire rate controller
- 11: cylinder
- 12: screw
- 13: extrusion port
- 21: rubber flow path
- 21a: backbone rubber flow path
- 21b: branched rubber flow path
- 22a: carry-in entrance
- 22b: carry-out port
- 23: rubber discharge port
- 24: open/close valve
- 24a: valve hole
- 25: indication plate
- 26: handle
- 27: bolt
- 28: cap
- 31: unwinding device
- 32: wire heater
- 51: pressure sensor
- B: bead (creel bead)
- BW: single bead
- D: screw diameter
- G: rubber
- M: motor
- S1, S2: proximity sensor
- SG: spew rubber
- V: rubber flow path volume
- W: wire

## Claims

1. A rubber-coated cord manufacturing device for manufacturing a rubber-coated cord by coating a rubber on a cord,
which comprises
a screw rotation type extruder for extruding the rubber;
an extrusion head for coating the rubber on the surface of the cord, which has an insertion port into which the cord is inserted and a flow path of the rubber extruded from the extruder;
a cord supply device for supplying the cord to the extrusion head;
a rubber-coated cord winding device for winding the rubber-coated cord coated by the extrusion head; and
a head pressure controller for controlling the head pressure of the extrusion head;
wherein
the head pressure controller controls the head pressure to maintain it at a predetermined pressure by monitoring the head pressure, feeding back the results of monitoring to the extruder and adjusting the rotation speed of the screw during the working of coating the rubber to the cord.

2. The rubber-coated cord manufacturing device **characterized in that** the rubber-coated cord is a bead.

3. The rubber-coated cord manufacturing device according to claim 1 or claim 2, **characterized in that** the head pressure controller is a device for controlling the head pressure by PI control.

4. The rubber-coated cord manufacturing device according to any one of claims 1 to 3,
which further comprises a cord rate controller for controlling the rate of supplying the cord to the insertion port of the extrusion head to a predetermined rate.

5. A rubber-coated cord manufacturing method for manufacturing a rubber-coated cord by forming a rubber coating on surface of a cord with a rubber-coated cord manufacturing device according to any one of claims 1 to 4,
which comprises
a rubber supply step of supplying the rubber to the extrusion head with a screw rotation type extruder;
a cord insertion step of inserting the cord into the insertion port of the extrusion head;
a rubber-coated cord processing step of processing a rubber-coated cord by coating the rubber extruded from the extruder on the surface of the inserted cord; and
a rubber-coated cord winding step of winding the processed rubber-coated cord,
wherein
the head pressure of the extrusion head is controlled to maintain at a predetermined pressure by monitoring the head pressure of the extrusion head with the head pressure controller, feeding back the results of monitoring to the extruder and adjusting the rotation speed of the screw during the rubber-coated cord processing step.

6. The rubber-coated cord manufacturing method according to claim 5,
wherein the head pressure is controlled within a range of 8-12 MPa with the head pressure controller when coating the rubber on the surface of the cord.

7. The rubber-coated cord manufacturing method according to claim 5 or claim 6, wherein
a rubber-coated cord manufacturing device according to claim 4 is used, and
the feed rate of the cord is controlled to constant rate with the cord rate controller.
